# EUROPEAN PATENT APPLICATION

(11) **EP 4 596 904 A1**
(43) Date of publication of application: **06.08.2025**
(21) Application number: 24155131.6
(22) Date of filing: 31.01.2024
(51) Int. Cl.: F16B 25/00

(54) **LOW RESISTANCE ANTI-CRACK SCREW STRUCTURE**

(71) Applicant: Masterpiece Hardware Industrial Co., Ltd., Lukang Township, Changhua County 505 (TW); Wang, Rick, Lukang Township, Changhua County 505 (TW)
(72) Inventor: WANG, Rick, Lukang Township, Changhua County 505 (TW); TU, Chun-Ting, Lukang Township, Changhua County 505 (TW)
(74) Representative: Lang, Christian

(57) **Abstract**

A low resistance anti-crack screw structure, including a low resistance screw comprising an upper section of screw, a middle section of screw, a lower section of screw, and a cone-shaped screw tail. The lower section of screw is recessed with at least one chip ditch that gradually becomes deeper from top to bottom. The chip ditch is tilted with respect to the central axis of the low resistance screw and has a chip removal angle between 10 degrees and 20 degrees. The second ditch section is inclined relative to the radial direction having an incline angle between 79 degrees and 89 degrees, and the maximum depth of the second ditch section is less than 55% of the radius of the lower section of screw. The lower side of the chip ditch is tapered close to the screw tail and has a drag reduction angle between 15 degrees and 20 degrees.

## Description

### BACKGROUND OF THE INVENTION

### Field of the Invention

This invention relates to a low resistance anti-crack screw structure, in particular, to a low resistance anti-crack screw structure with higher structural strength and better chip removal efficiency.

### Description of the Related Art

A cut-tail screw is a screw used for self-tapping. A groove or a ditch is cut at the end of the screw to remove chips when self-tapping, and it is widely used in objects that have been pre-drilled. However, cutting the groove essentially makes damage to the screw and the strength of the screw will be reduced, resulting in poor screw yield. The conventional cut-tail screws often cause the tapered screw tail to be damaged because the tail end is cut into a groove, or the user may choose not to use a cone-shaped screw tail.

The conventional cut-tail screws usually cut out grooves at their tail ends by directly removing them, which is equivalent to directly damaging the structure of the spiral, greatly reducing the structural strength, which is not conducive to manufacturing and use. In addition to causing damage to the screw, the conventional cut-tail screws may also have problems when debris enters the groove that may have uneven chip removal speed and force, and resistance may also affect the quality of the screw.

Therefore, it is necessary to improve the chip removal efficiency and reduce the impact of resistance while maintaining the structural strength of the screw to facilitate manufacturing and use.

### SUMMARY OF THE INVENTION

This invention provides a low resistance anti-crack screw structure to solve the above-mentioned deficiencies in the prior art.

The present invention provides a low resistance anti-crack screw structure, including a low resistance screw, the low resistance screw comprises an upper section of screw, a middle section of screw, a lower section of screw, and a cone-shaped screw tail. The lower section of screw is recessed with at least one chip ditch. The chip ditch gradually becomes deeper from top to bottom. The chip ditch is tilted with respect to the central axis of the low resistance screw and has a chip removal angle. The chip removal angle is between 10 degrees and 20 degrees. The chip ditch is divided into a flat first ditch section and an inclined second ditch section. The second ditch section is inclined relative to the radial direction. There is an incline angle between 79 degrees and 89 degrees, and the maximum depth of the second ditch section is less than 55% of the radius of the lower section of screw. The lower side of the chip ditch is tapered close to the screw tail and has a drag reduction angle. The drag reduction angle is between 15 degrees and 20 degrees to prevent excessive squeezing and increase in resistance when debris begins to enter and leave the chip ditch, thus increasing the complete penetration capability of the screw during rotation. The surface of the lower section of screw and the screw tail is provided with a lower thread. The inclination directions of the lower thread and the chip ditch are the same relatives to the central axe of the low resistance screw, and the lower thread is continuous so that the chip ditch is separated by the lower thread.

Further, a tooth angle of the lower thread is between 37 degrees and 43 degrees.

Further, the surface of the upper section of screw is provided with a upper thread, and the upper thread is opposite to the spiral direction of the lower thread.

Further, the chip removal angle is 15 degrees.

Further, the incline angle is 84 degrees.

Further, the drag reduction angle is 18 degrees.

The first advantage of the present invention is that the screw tail of the low resistance screw can be pressed against the object that needs to be screwed and the low resistance screw is screwed in and a hole is expanded with the lower thread to achieve a self-tapping effect, and then the low resistance screw can be screwed to the object. Since the lower section of screw is recessed with at least one chip ditch to reserve extra space, the debris generated after scraping the lower thread can pass in and out of the chip ditch, which can speed up the speed and efficiency of the debris being discharged out of the hole, avoid the accumulation of debris that affects the efficiency of self-tapping, and prevent the accumulation of debris from colliding with the low resistance screw and avoid skewing and affecting the quality of screwing. In addition, the lower thread is continuous so that the chip ditch is separated by the lower thread, thereby preventing debris from being blocked by not being discharged according to the spiral direction.

The second advantage of the present invention is that, since the chip ditch is only recessed in the lower section of screw and is not located on the screw tail, the structure of the screw tail is not damaged, so the structural strength is strong, which prevents the screw tail from breaking during the manufacturing process and avoids the screw tail from breaking in the hole when the low resistance screw is unscrewed from the hole in the future. Because the chip ditch gradually becomes deeper from top to bottom, the closer to the bottom of the low resistance screw, the deeper the chip ditch is. This can result in the greater resistance encountered by the front end of the low resistance screw when it is self-tapping and accommodates more debris, the chip removal efficiency can be therefore improved. Because the maximum depth of the second ditch section is smaller than 55% of the radius of the lower section of screw, while ensuring the chip removal efficiency, the structural strength of the lower section of screw is ensured to avoid breakage and damage during manufacturing or use. Related to the central axis of the low resistance screw, the chip ditch is inclined with a chip removal angle, and the lower thread and the chip ditch are tilted in the same direction relative to the central axis of the low resistance screw. This allows the debris to smoothly enter the chip ditch, further improving the chip removal efficiency.

The third advantage of the present invention is that, since two sides of the lower side of the chip ditch near the screw tail are tapered and have a drag reduction angle, when the low resistance screw starts to penetrate the target object, the bottom of the chip ditch is narrow to avoid the resistance of the low resistance screw from rising due to the extrusion of debris in the chip ditch in the early stage, and at the same time, it can prevent the low resistance screw from shaking due to excessive resistance in the early stage of screw rotation, thereby reducing the resistance and improving the complete penetration ability of the low resistance screw.

### BRIEF DESCRIPTION OF THE DRAWINGS

The following drawings are merely examples for illustrative purposes according to various disclosed embodiments and are not intended to limit the scope of the present disclosure.
Figure 1 is a perspective view of the present invention.
Figure 2 is a front view of the present invention, in which the screw tail is cut for a better explanation.
Figure 3 is a cross-sectional view along line AA in Figure 2 of the present invention.
Figure 4 is a cross-sectional view along line BB in Figure 2 of the present invention.
Figure 5 is a cross-sectional view along line CC in Figure 2 of the present invention.
Figure 6 is a front view of the lower section of the screw and the screw tail part of the present invention.
Figure 7 is a cross-sectional view along line DD in Figure 6 of the present invention.
Figure 8 is a partial enlarged view of the lower section of the screw and the screw tail part of the present invention.
Figure 9 is a schematic diagram of the depth of the chip removal ditch of the present invention, in which the thread is omitted for better explanation.
Figure 10 is a schematic diagram of a screw advancing according to the present invention.
Figure 11 is a schematic diagram of the angle part of the present invention.
Figure 12 is a schematic diagram of the use status of the present invention.
Figure 13 is a schematic diagram of chip removal by the lower section of the screw when the present invention is in actual use.
Figure 14 is a schematic diagram of the first aspect of the middle section of the screw of the present invention.
Figure 15 is a schematic diagram of the second aspect of the middle section of the screw of the present invention.
Figure 16 is a schematic diagram of the third aspect of the middle section of the screw of the present invention.
Figure 17 is a schematic diagram of the fourth aspect of the middle section of the screw of the present invention.
Figure 18 is a schematic diagram of the fifth aspect of the middle section of the screw of the present invention.
Figure 19 is a schematic diagram of the sixth aspect of the middle section of the screw of the present invention.
Figure 20 is a schematic diagram of the first aspect of the upper section of the screw of the present invention.
Figure 21 is a schematic diagram of the second aspect of the upper section of the screw of the present invention.
Figure 22 is a schematic diagram of the third aspect of the upper section of the screw of the present invention.
Figure 23 is a schematic diagram of the fourth aspect of the upper section of the screw of the present invention.
Figure 24 is a schematic diagram of the fifth aspect of the upper section of the screw of the present invention.
Figure 25 is a schematic diagram of the sixth aspect of the upper section of the screw of the present invention.
Figure 26 is a schematic diagram of the first aspect of the screw head of the present invention.
Figure 27 is a schematic diagram of the second aspect of the screw head of the present invention.
Figure 28 is a schematic diagram of the third aspect of the screw head of the present invention.
Figure 29 is a schematic diagram of the fourth aspect of the screw head of the present invention.
Figure 30 is a schematic diagram of the fifth aspect of the screw head of the present invention.

### DETAILED DESCRIPTION OF THE INVENTION

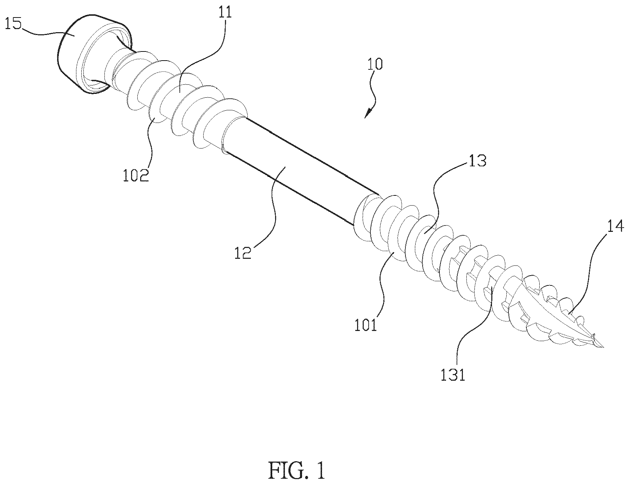

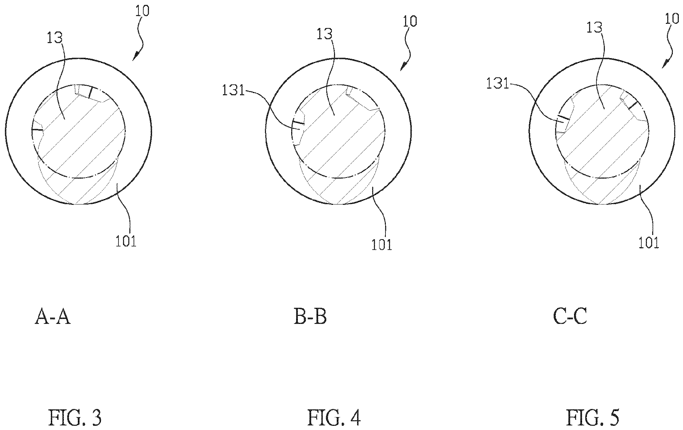

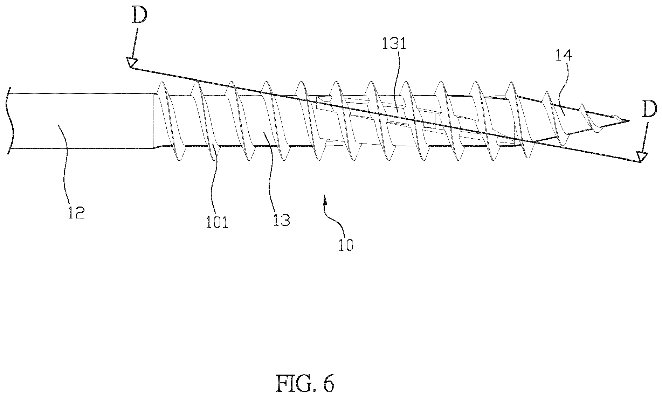

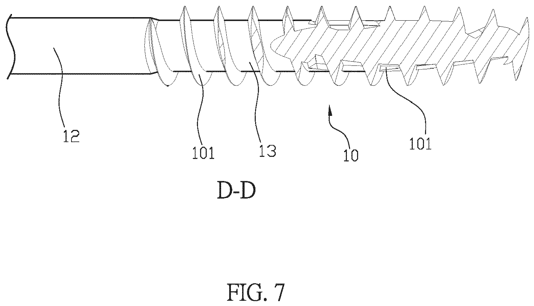

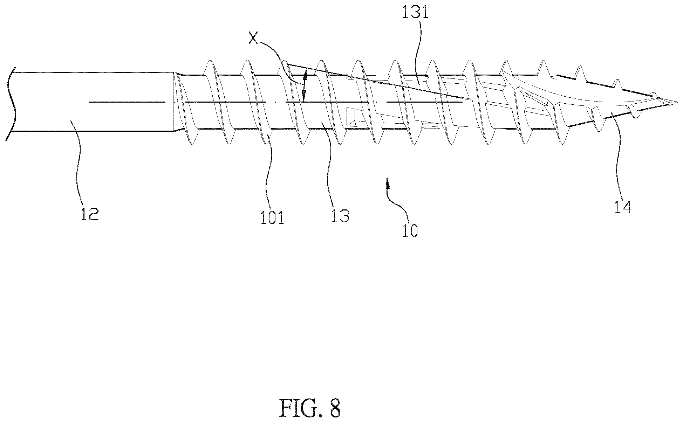

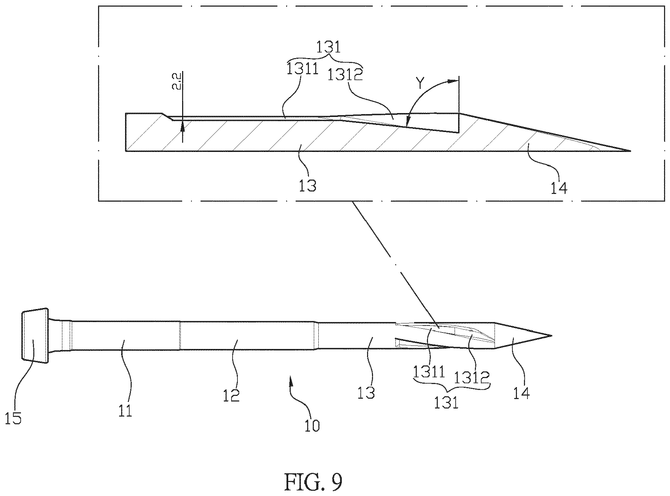

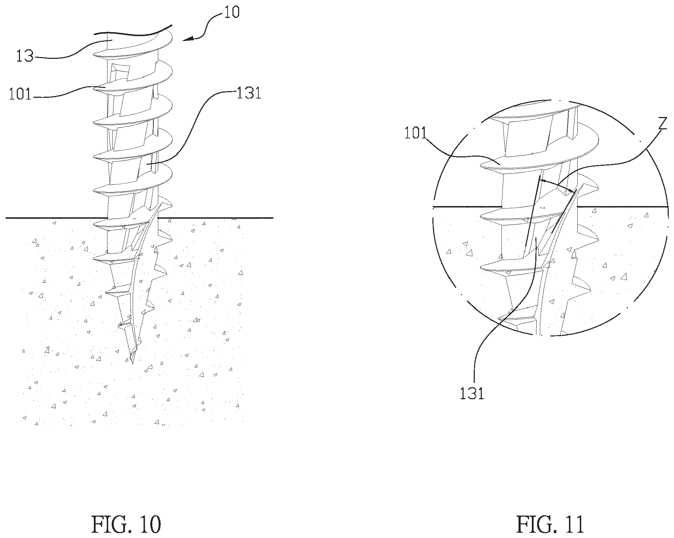

As shown in Figures 1-2, the present invention provides a low resistance anti-crack screw structure, including a low resistance screw 10, the low resistance screw 10 comprises an upper section of screw 11, a middle section of screw 12, a lower section of screw 13, and a cone-shaped screw tail 14. The lower section of screw 13 is recessed with at least one chip ditch 131. As shown in Figures 3-7, the chip ditch 131 gradually becomes deeper from top to bottom. As shown in Figure 8, , the chip ditch 131 is tilted with respect to the central axis of the low resistance screw 10 and has a chip removal angle X. The chip removal angle X is between 10 degrees and 20 degrees. As shown in Figure 9, the chip ditch 131 is divided into a flat first ditch section 1311 and an inclined second ditch section 1312. The second ditch section 1312 is inclined relative to the radial direction. There is an incline angle Y between 79 degrees and 89 degrees, and the maximum depth of the second ditch section 1312 is less than 55% of the radius of the lower section of screw 13. As shown in Figures 10-11, the lower side of the chip ditch 131 is tapered close to the screw tail 14 and has a drag reduction angle Z. The drag reduction angle Z is between 15 degrees and 20 degrees to prevent excessive squeezing and increase in resistance when debris begins to enter and leave the chip ditch 131, thus increasing the complete penetration capability of the screw during rotation. The surface of the lower section of screw 13 and the screw tail 14 is provided with a lower thread 101. The inclination directions of the lower thread 101 and the chip ditch 131 are the same relatives to the central axe of the low resistance screw 10, and the lower thread 101 is continuous so that the chip ditch 131 is separated by the lower thread 101.

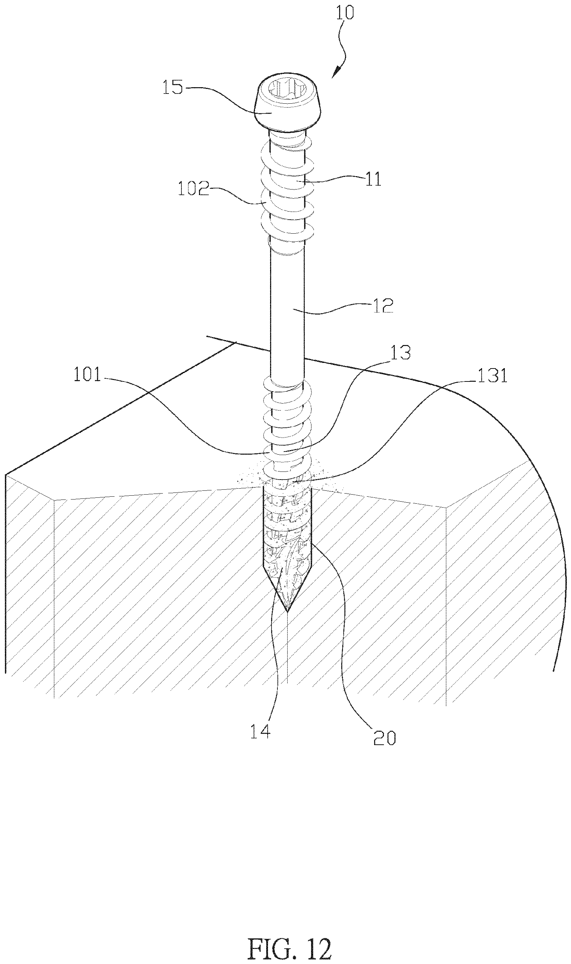

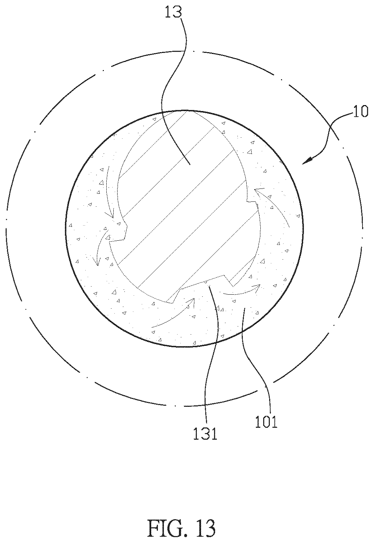

As shown in Figures 12-13, in the actual use, the screw tail 14 of the low resistance screw 10 can be pressed against the object that needs to be screwed and the low resistance screw 10 is screwed in and a hole 20 is expanded with the lower thread 101 to achieve a self-tapping effect, and then the low resistance screw 10 can be screwed to the object. Since the lower section of screw 13 is recessed with at least one chip ditch 131 to reserve extra space, the debris generated after scraping the lower thread 101 can pass in and out of the chip ditch 131, which can speed up the speed and efficiency of the debris being discharged out of the hole 20, avoid the accumulation of debris that affects the efficiency of self-tapping, and prevent the accumulation of debris from colliding with the low resistance screw 10 and avoid skewing and affecting the quality of screwing. In addition, the lower thread 101 is continuous so that the chip ditch 131 is separated by the lower thread 101, thereby preventing debris from being blocked by not being discharged according to the spiral direction.

With the above structure, since the chip ditch 131 is only recessed in the lower section of screw 13 and is not located on the screw tail 14, the structure of the screw tail 14 is not damaged, so the structural strength is strong, which prevents the screw tail 14 from breaking during the manufacturing process and avoids the screw tail 14 from breaking in the hole 20 when the low resistance screw 10 is unscrewed from the hole 20 in the future. Because the chip ditch 131 gradually becomes deeper from top to bottom, the closer to the bottom of the low resistance screw 10, the deeper the chip ditch 131 is. This can result in the greater resistance encountered by the front end of the low resistance screw 10 when it is self-tapping and accommodates more debris, the chip removal efficiency can be therefore improved. Because the maximum depth of the second ditch section 1312 is smaller than 55% of the radius of the lower section of screw 13, while ensuring the chip removal efficiency, the structural strength of the lower section of screw 13 is ensured to avoid breakage and damage during manufacturing or use. Related to the central axis of the low resistance screw 10, the chip ditch 131 is inclined with a chip removal angle X, and the lower thread 101 and the chip ditch 131 are tilted in the same direction relative to the central axis of the low resistance screw 10. This allows the debris to smoothly enter the chip ditch 131, further improving the chip removal efficiency.

Moreover, since two sides of the lower side of the chip ditch 131 near the screw tail 14 are tapered and have a drag reduction angle Z, when the low resistance screw 10 starts to penetrate the target object, the bottom of the chip ditch 131 is narrow to avoid the resistance of the low resistance screw 10 from rising due to the extrusion of debris in the chip ditch 131 in the early stage, and at the same time, it can prevent the low resistance screw 10 from shaking due to excessive resistance in the early stage of screw rotation, thereby reducing the resistance and improving the complete penetration ability of the low resistance screw 10.

Therefore, the low resistance screw 10 of the present invention improves the chip removal efficiency while ensuring the structural strength, which is of great benefit in use.

As shown in Figure 8, the present invention provides a low resistance anti-crack screw structure, wherein a tooth angle of the lower thread 101 is between 37 degrees and 43 degrees.

As shown in Figure 9, the present invention provides a low resistance anti-crack screw structure, wherein the depth of the first ditch section 1311 is 15% to 20% of the radius of the lower section of screw 13.

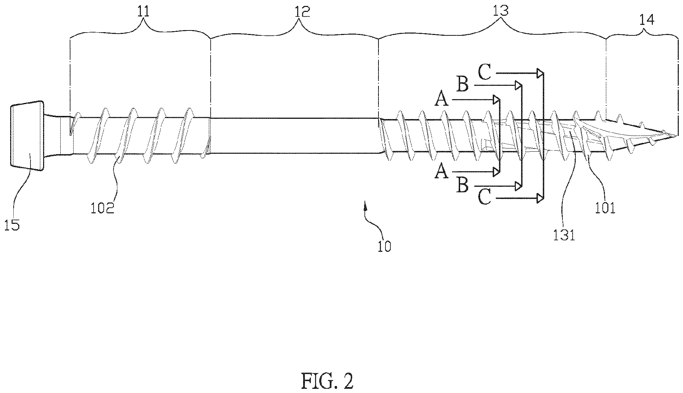

As shown in Figure 2, the present invention provides a low resistance anti-crack screw structure, wherein the surface of the upper section of screw 11 is provided with a upper thread 102, and the upper thread 102 is opposite to the spiral direction of the lower thread 101, so that the low resistance screw 10 has a reversing thread structure.

As shown in Figure 8, the present invention provides a low resistance anti-crack screw structure, wherein the chip removal angle X is 15 degrees.

As shown in Figure 9, the present invention provides a low resistance anti-crack screw structure, wherein the incline angle Y is 84 degrees.

As shown in Figures 10 and 11, the present invention provides a low resistance anti-crack screw structure, wherein the drag reduction angle Z is 18 degrees.

The present invention provides a low resistance anti-crack screw structure, wherein both sides of the chip ditch 131 are inclined, and the angle between the two sides of the chip ditch 131 is 65 degrees. The inclination angle of one side of the chip ditch 131 is 45 degrees and the inclination angle of the other side is 20 degrees. The larger inclination angle can be used for debris to slide into the chip ditch 131 and the debris accumulates in smaller inclination angle.

The present invention provides a low resistance anti-crack screw structure, wherein the maximum depth of the second ditch section 1312 is between 40% and 55% of the radius of the lower section of screw 13.

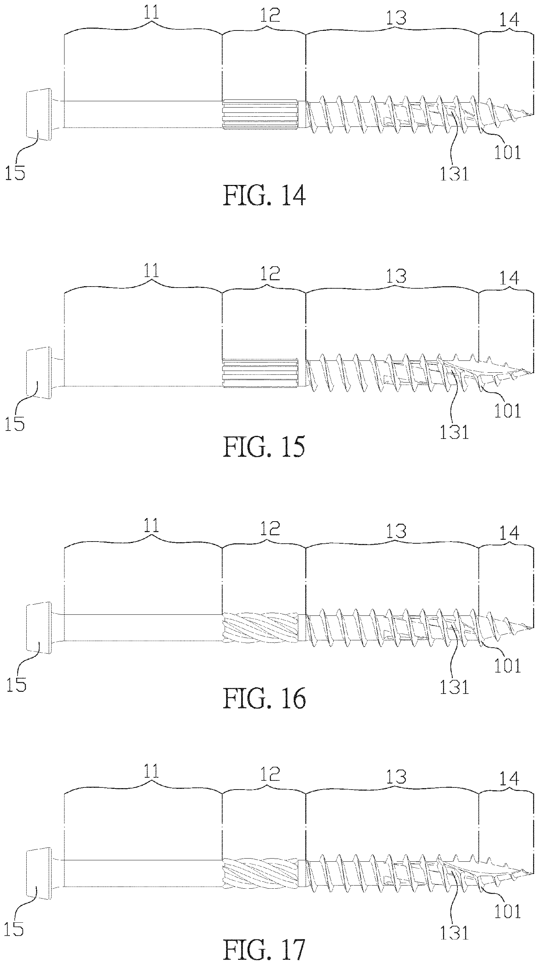

Figures 14-19 illustrate schematic diagrams of the different aspects of the middle section of screw 12. There are different functions and appearances according to the aspects of the surface of the middle section of screw 12.

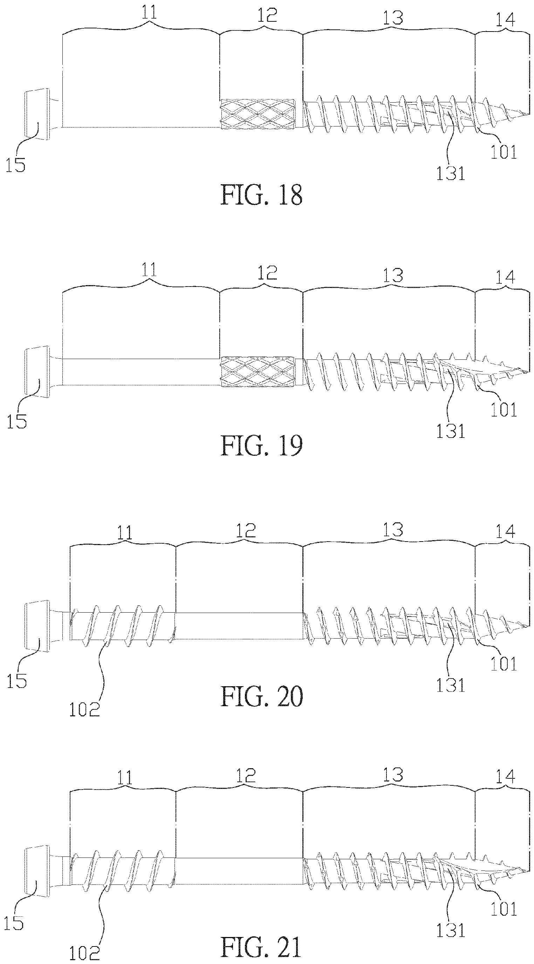

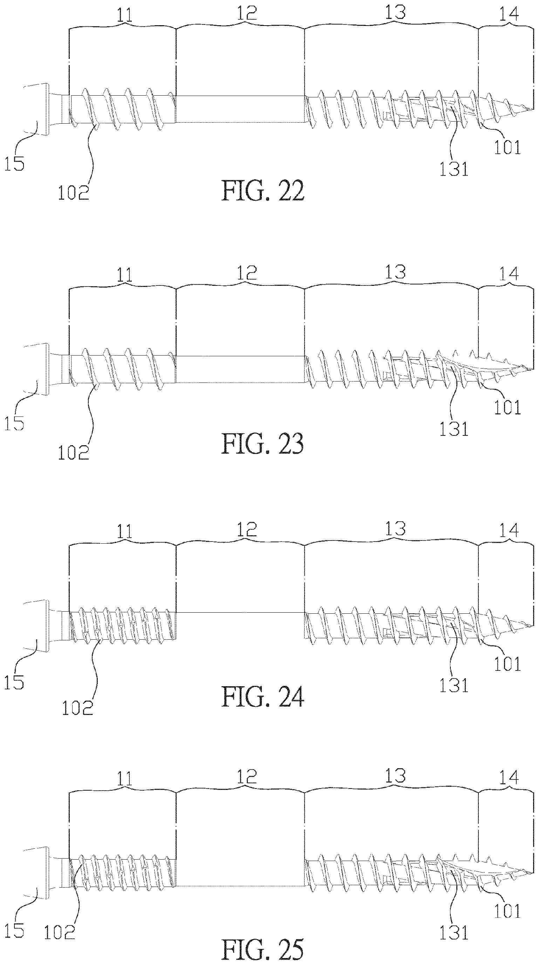

Figures 20-25 illustrate schematic diagrams of different aspects of the upper section of screw 11. There are different functions and rotation directions according to the aspects of the upper thread 102.

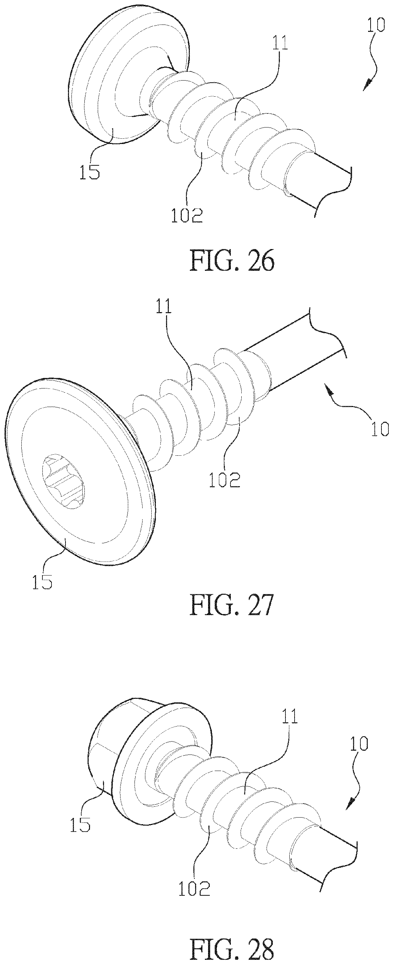

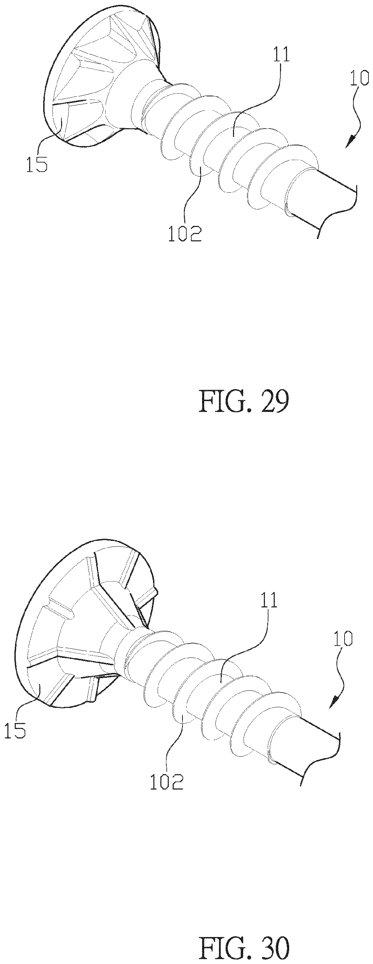

The top of the low resistance screw 10 has a screw head 15 to facilitate screw locking. Figures 26-30 illustrate schematic diagrams of different aspects of the screw head 15. There are different functions according to the aspects of the screw head 15.

## Claims

1. A low resistance anti-crack screw structure, comprising a low resistance screw 10, the low resistance screw 10 comprises an upper section of screw 11, a middle section of screw 12, a lower section of screw 13, and a cone-shaped screw tail 14, wherein:
the lower section of screw 13 is recessed with at least one chip ditch 131, the chip ditch 131 gradually becomes deeper from top to bottom, the chip ditch 131 is tilted with respect to a central axis of the low resistance screw 10 and has a chip removal angle X, the chip removal angle X is between 10 degrees and 20 degrees, the chip ditch 131 is divided into a flat first ditch section 1311 and an inclined second ditch section 1312, the second ditch section 1312 is inclined relative to a radial direction, there is an incline angle Y between 79 degrees and 89 degrees, and the maximum depth of the second ditch section 1312 is less than 55% of the radius of the lower section of screw 13, the lower side of the chip ditch 131 is tapered close to the screw tail 14 and has a drag reduction angle Z, the drag reduction angle Z is between 15 degrees and 20 degrees to prevent excessive squeezing and increase in resistance when debris begins to enter and leave the chip ditch 131, thus increasing the complete penetration capability of the screw during rotation, the surface of the lower section of screw 13 and the screw tail 14 is provided with a lower thread 101, an inclination directions of the lower thread 101 and the chip ditch 131 are the same relatives to the central axe of the low resistance screw 10, and the lower thread 101 is continuous so that the chip ditch 131 is separated by the lower thread 101.

2. The low resistance anti-crack screw structure of claim 1, wherein a tooth angle of the lower thread 101 is between 37 degrees and 43 degrees.

3. The low resistance anti-crack screw structure of claim 1, wherein a depth of the first ditch section 1311 is 15% to 20% of the radius of the lower section of screw 13.

4. The low resistance anti-crack screw structure of claim 1, wherein a surface of the upper section of screw 11 is provided with a upper thread 102, and the upper thread 102 is opposite to a spiral direction of the lower thread 101.

5. The low resistance anti-crack screw structure of claim 1, wherein the chip removal angle X is 15 degrees.

6. The low resistance anti-crack screw structure of claim 1, wherein the incline angle Y is 84 degrees.

7. The low resistance anti-crack screw structure of claim 1, wherein the drag reduction angle Z is 18 degrees.

8. The low resistance anti-crack screw structure of claim 1, wherein both sides of the chip ditch 131 are inclined, and an angle between the two sides of the chip ditch 131 is 65 degrees.

9. The low resistance anti-crack screw structure of claim 8, wherein the inclination angle of one side of the chip ditch 131 is 45 degrees and the inclination angle of the other side is 20 degrees.

10. The low resistance anti-crack screw structure of claim 1, wherein a maximum depth of the second ditch section 1312 is between 40% and 55% of the radius of the lower section of screw 13.
